# EUROPÄISCHE PATENTSCHRIFT

(11) **EP 1 007 861 B1**
(45) Veröffentlichungstag und Bekanntmachung des Hinweises auf die Patenterteilung: **04.09.2002**
(21) Anmeldenummer: 98945208.1
(22) Anmeldetag: 11.08.1998
(51) Int. Cl.: F16C 32/06, F16C 29/02

(54) **REGLER ZUR REGELUNG EINES FLUIDSTROMS EINER HYDROSTATIK- ODER AEROSTATIKSVORRICHTUNG**
REGULATOR FOR ADJUSTING THE FLUID FLOW IN A HYDROSTATIC OR AEROSTATIC DEVICE
REGULATEUR SERVANT A LA REGULATION DU COURANT DE FLUIDE D'UN DISPOSITIF HYDROSTATIQUE OU AEROSTATIQUE

(30) Priorität: 29.08.1997 DE 19737781
(43) Veröffentlichungstag der Anmeldung: 14.06.2000
(73) Patentinhaber: Schönfeld, Robert, 73095 Albershausen (DE)
(72) Erfinder: Schönfeld, Robert, 73095 Albershausen (DE)
(74) Vertreter: Gleiss, Alf-Olav, Dr.jur. Dipl.-Ing.
(86) Internationale Anmeldenummer: EP9805080
(87) Internationale Veröffentlichungsnummer: WO99011943

(56) Entgegenhaltungen:
- EP-A- 0 840 190
- DE-A- 2 829 787
- DE-C- 3 533 037
- FR-A- 931 540
- FR-A- 997 880
- FR-A- 2 130 997
- US-A- 3 779 274

## Beschreibung

Die Erfindung betrifft einen Regler zur Regelung eines mindestens einer Hydrostatik- oder Aerostatiktasche einer Lagerung, Gewindespindelmutter oder Führung zugeführten Medienstromes gemäß Oberbegriff des Anspruchs 1.

Regler der hier angesprochenen Art sind für Flüssigkeiten bekannt (DE 35 33 037 C1). Sie zeichnen sich dadurch aus, daß der von dem Regler beeinflußte Fluidstrom bei einer Druckerhöhung in der Hydrostatiktasche zunimmt. Hydrostatische Lagerungen, Gewindespindelmuttern oder Führungen, die mit Reglern der oben genannten Art zusammenwirken, zeichnen sich aufgrund dessen dadurch aus, daß die erreichbaren Steifen und Belastungen dieser Elemente bei vergleichbaren technischen Daten wesentlich größer als die mit alternativen Systemen sind. Die Durchflußmenge Q ist proportional zur dritten Potenz der Spalthöhe beziehungsweise der Höhe h des von dem Medium durchströmten Spalts der Tasche. Es ergibt sich bei laminarer Strömung die Bedingung Q ∼ p · h³/η, wobei mit η die dynamische Viskosität des Mediums beziehungsweise der Flüssigkeit bezeichnet wird. Dieser Zusammenhang ist in ähnlicher Weise für gasförmige Medien gültig.

Aus der hier wiedergegeben Zuordnung ergibt sich, daß die Änderung der Höhe h aufgrund einer Druckänderung in der Hydrostatiktasche durch eine Zunahme des Flüssigkeitsstromes beziehungsweise der Durchflußmenge Q reduziert, beziehungsweise praktisch ganz vermieden werden kann. Wird also eine Hydrostatiktasche so belastet, daß der in dieser Hydrostatiktasche herrschende Druck erhöht wird, so kann einer Spalthöhenänderung und damit einer Verlagerung der geführten beziehungsweise gelagerten Teile dadurch entgegengewirkt werden, daß der vom Regler in die Hydrostatiktasche fließende Fluidstrom vergrößert wird. Hierdurch ergibt sich eine höhere Steife.

Der bekannte Regler ist so konzipiert, daß üblicherweise zumindest zwei Regler in einem Block zusammengefaßt sind und von einem gemeinsamen Druckanschluß gespeist werden. Dieses Konzept führt in vielen Fällen dazu, daß zwischen den Reglern und den Hydrostatiktaschen mit teilweise erheblichem Aufwand relativ lange Verbindungsleitungen geschaffen werden müssen, wobei die räumliche Unterbringung dieser Leitungen oftmals sehr schwierig ist, zum Beispiel bei der Versorgung von Gewindetrieben mit hydrostatischer Mutter. Nachteilig bei dem bekannten Regler ist weiterhin, daß dieser vielfach aufgrund der hohen kinetischen Energie des Fluids/Gas in den Leitungen zum Schwingen neigt.

Es ist daher Aufgabe der Erfindung, einen für flüssige und auch für gasförmige Medien verwendbaren Regler zu schaffen, der die genannten Nachteile nicht aufweist.

Zur Lösung dieser Aufgabe wird ein Regler vorgeschlagen, der die in Anspruch 1 genannten Merkmale aufweist. Der Regler zeichnet sich dadurch aus, daß die Gegenfläche der Lagerung, Gewindespindelmutter oder der Führung zugeordnet ist und daß das Reglergehäuse eine eine Durchlaßöffnung für den Medienstrom umfassende Anlagefläche aufweist, mit der das Reglergehäuse im montierten Zustand an der der Lagerung, Gewindespindelmutter oder der Führung zugeordneten Gegenfläche anliegt, so daß eine direkte Medienverbindung zwischen Regler und Tasche und gegebenenfalls zwischen Regler und Medienversorgung geschaffen wird. Im Zusammenhang mit der vorliegenden Erfindung wird unter "direkter" Medienverbindung eine Verbindung verstanden, die ohne Verschraubung und zusätzliche Montageelemente hergestellt wird. Beim Anbringen des Reglers an der Gegenfläche wird also gleichzeitig die Medienverbindung gebildet. Hierdurch kann einerseits der Aufbau des Reglers vereinfacht und andererseits der Aufwand zu dessen Montage verringert werden. Die Gegenfläche kann beispielsweise eine Teilfläche eines Gehäuses der Lagerung, Gewindespindelmutter oder der Führung sein. Dadurch ist es möglich, den Regler in unmittelbarer Nähe der Hydro-/Aerostatiktasche anzuordnen, so daß kurze Verbindungsleitungen zwischen dem Regler und der Tasche realisierbar sind. Hierdurch kann ein Schwingen des Mediums in den Verbindungsleitungen verhindert, zumindest aber weitgehend verringert beziehungsweise abgeschwächt werden. Der Regler ist einfach und schnell montierbar und zeichnet sich weiterhin durch einen einfachen Aufbau aus.

Bei einer vorteilhaften Ausführungsform des Reglers ist vorgesehen, daß das Reglergehäuse mindestens zwei Gehäuseteile umfaßt, zwischen denen der erste Druckraum, das Steuerelement, der zweite Druckraum und der zweite Strömungswiderstand angeordnet sind. Dadurch kann eine besonders kompakte Bauweise des Reglers realisiert werden.

Bevorzugt wird auch eine Ausführungsform des Reglers, bei der der erste Strömungswiderstand in die am ersten Gehäuseteil ausgebildete Anlagefläche und/oder in die Gegenfläche eingearbeitet ist. Unter "Einarbeiten" wird sowohl das Einbringen des ersten Strömungswiderstandes mittels eines Schneidwerkzeugs, beispielsweise einem Fräser, verstanden, als auch eine spanlose Bearbeitung. Der erste Strömungswiderstand kann in die dafür vorgesehene Fläche also auch eingepreßt/-gedrückt oder bei der Herstellung des ersten Gehäuseteils und/oder der Gegenfläche eingeformt werden.

Weitere vorteilhafte Ausgestaltungen ergeben sich aus den übrigen Unteransprüchen.

Die Erfindung wird im folgenden anhand der Zeichnung näher erläutert. Es zeigen:
- Figuren 1 bis 3: eine Draufsicht, einen Querschnitt und eine Untersicht eines Ausführungsbeispiels des erfindungsgemäßen Reglers;
- Figuren 4 und 5: eine Untersicht und einen Querschnitt eines weiteren Ausführungsbeispiels des Reglers und
- Figur 6: Querschnitt eines dritten Ausführungsbeispiels des Reglers.

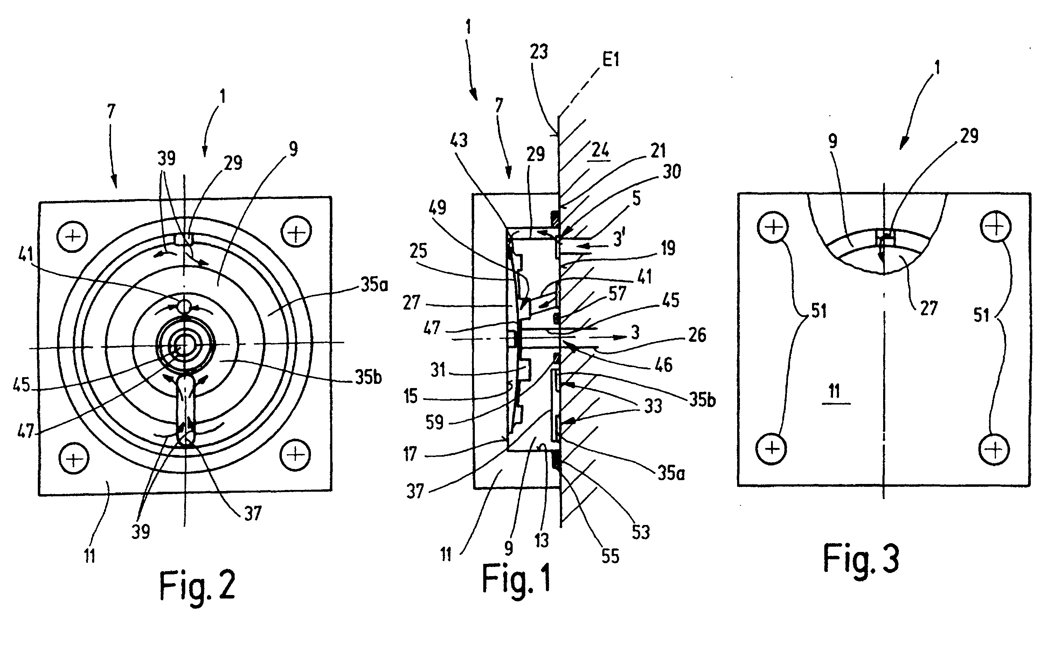

Figur 1 zeigt einen Querschnitt eines ersten Ausführungsbeispiels eines Reglers 1, der dazu dient, einen Medienstrom zu regeln, der einem Verbraucher, insbesondere einer hier nicht dargestellten hydrostatischen oder einer aerostatischen Tasche über eine Medienverbindung 3 zugeführt wird. Derartige Taschen finden sich bei hydrostatischen oder aerostatischen Lagerungen, Gewindespindelmuttern und Führungen. Der Regler 1 wird von einer von einem nicht dargestellten Motor angetriebenen Pumpe, die als Medienversorgung dient und einen Medienstrom bereitstellt, über eine Zufuhrleitung 5, beispielsweise mit einem flüssigen Medium, vorzugsweise Öl, versorgt. Rein beispielhaft wird im folgenden davon ausgegangen, daß es sich bei dem Medium um eine Flüssigkeit handelt.

Der Regler 1 weist ein Reglergehäuse 7 auf, das zwei separierbare Gehäuseteile 9 und 11 umfaßt. Das als kreisrunde Scheibe ausgebildete erste Gehäuseteil 9 ist in einer Sackbohrung 13 des topfförmig ausgebildeten zweiten Gehäuseteils 11 angeordnet. Die Sackbohrung 13 weist eine an die Außenkontur des ersten Gehäuseteil 9 angepaßte Kontur auf und ist hier demgemäß kreisförmig ausgebildet. Das erste Gehäuseteil 9 liegt mit seiner dem Grund 15 der Sackbohrung 13 zugewandten Oberfläche 17 an diesem an, wobei die Dicke des ersten Gehäuseteils 9 derart gewählt ist, daß die der Oberfläche 17 gegenüberliegende Seite des ersten Gehäuseteils 19, nämlich die Anlagefläche 19, im wesentlichen in der gleichen -senkrecht zur Bildebene der Figur 1 verlaufenden- gedachten Ebene E1 liegt, wie die Gehäusefläche 21 des zweiten Gehäuseteils 11.

Der Regler 1 ist in Figur 1 im montierten Zustand dargestellt. Dabei liegen die Anlagefläche 19 des ersten Gehäuseteils 9 und die Gehäusefläche 21 des zweiten Gehäuseteils 11 an einer Gegenfläche 23 eines Gehäuses 24 einer Lagerung, Gewindespindelmutter oder Führung an. In der Gegenfläche 23 münden sowohl eine Verbindungsleitung 26, die Teil der Medienverbindung 3 ist, als auch die mit der Medienversorgung in Verbindung stehende Zufuhrleitung 5, die Teil einer Medienverbindung 3' ist.

Im folgenden wird der Aufbau des Reglers 1 näher erläutert: Dieser umfaßt drei Druckräume, die von einem von einer federelastischen Platte gebildeten Steuerelement 25 getrennt sind. Der erste Druckraum 27 ist über eine randoffene Ausnehmung 29 im ersten Gehäuseteil 9, die sich bis zu einer Durchlaßöffnung 30 erstreckt, die an der Stelle des ersten Gehäuseteils 9 angeordnet ist, die im montierten Zustand des Reglers 1 der in der Gegenfläche 23 mündenden Zufuhrleitung 5 gegenüberliegt, mit der Zufuhrleitung 5 verbunden. Der erste Druckraum 27 wird mit einem ersten Druckniveau p1 beaufschlagt, das im wesentlichen dem der Medienversorgung entspricht. Der zweite Druckraum 31 ist über einen nicht veränderbaren, ersten Strömungswiderstand 33 mit der Zufuhrleitung 5 und damit mit der Medienversorgung, also der nicht dargestellten Pumpe verbunden. Im zweiten Druckraum 31 liegt bei einer Strömung des Mediums durch den ersten Strömungswiderstand 33 ein zweites Druckniveau p2 vor. Auf den dritten Druckraum wird nachfolgend noch näher eingegangen.

Der erste Strömungswiderstand 33 ist bei diesem Ausführungsbeispiel in die Anlagefläche 19 des ersten Gehäuseteils 9 eingearbeitet und wird von zwei kreisförmigen Ringnuten 35a und 35b gebildet, die über eine in Form eines Langlochs ausgebildete Nut 37 miteinander verbunden sind. Die Nut 37 ist -wie die Ringnuten 35a, 35b- ausgehend von der Anlagefläche 19 des ersten Gehäuseteils 9 in dieses eingebracht. Die mit der Medienversorgung in Verbindung stehende Zufuhrleitung 5 mündet in die äußere Ringnut 35a in einem Bereich, der zur Nut 37 um einen Winkelbereich von circa 180° versetzt ist. Dieser von einem Umfangsbereich der Ringnut 35a gebildete Bereich, in dem das Medium aus der Zufuhrleitung 5 in den Regler strömt, wird im folgenden als Durchlaßöffnung 30 bezeichnet. Wie aus Figur 2, die eine Unteransicht des Reglers 1 gemäß Figur 1 zeigt, ersichtlich, strömt das von der Medienversorgung gelieferten Medium in zwei mit Pfeilen 39 angedeuteten Teilströmen, von denen einer in Richtung des Uhrzeigersinns und der andere entgegen dem Uhrzeigersinn über einen Winkelbereich der Ringnut 35a von circa 180° bis zur Nut 37. Von dieser gelangt das Medium in die innere Ringnut 35b und teilt sich wiederum in zwei Teilströme auf, die im und entgegen dem Uhrzeigersinn über einen Winkelbereich der kreisförmigen Ringnut 35b von circa 180° bis zu einem -bei diesem Ausführungsbeispiel als kreisrunde Bohrung 41 ausgebildeten- Kanal und von diesem in den zweiten Druckraum 31 strömen.

Das in Figur 1 dargestellte Steuerelement 25 ist in einer von der Oberfläche 17 des ersten Gehäuseteils 9 ausgehenden, hier kreisrund ausgebildeten Vertiefung 43 derart eingebracht, daß die Vertiefung 43 in den ersten Druckraum 27 und den zweiten Druckraum 31 unterteilt wird. Dazu wird das Steuerelement 25 zumindest weitgehend druckdicht in der Vertiefung 43 angeordnet.

Bei dem in Figur 1 dargestellten Ausführungsbeispiel ist in der Mitte der Vertiefung 43 ein kreisrunder Vorsprung vorgesehen, der eine zentrale Bohrung 45, die Teil der Medienverbindung 3 ist, und eine die Bohrung 45 umgebende Ringfläche 47 aufweist. Das Steuerelement 25 beziehungsweise die federelastische Platte bildet mit der Ringfläche 47 einen variablen zweiten Strömungswiderstand 49. Im drucklosen Zustand des Reglers 1 berührt das Steuerelement 25 die Ringfläche 47 nicht, da die Ringfläche 47 -wie in Figur 1 ersichtlich- in einer anderen Ebene liegt als die Auflagefläche für das Steuerelement 25. Das als zweiter Strömungswiderstand 49 dienende Steuerelement 25 trennt also den zweiten Druckraum 31 von einem ein Druckniveau p3 aufweisenden dritten Druckraum, der durch die zu der hier nicht dargestellten Tasche führenden Medienverbindung 3 gebildet wird.

Im Betrieb der Pumpe wird das Medium über die Zufuhrleitung 5 und über den ersten Strömungswiderstand 33 in den zweiten Druckraum 31 gefördert. Von dort gelangt das Medium über den variablen zweiten Strömungswiderstand 49, nämlich über einen von dem Steuerelement 25 beeinflußten Durchlaßspalt zwischen der Anlagefläche des Steuerelements 25 und der Ringfläche 47, in die zentrale Bohrung 45. Von dieser gelangt das Medium über eine Durchlaßöffnung 46 in die im Gehäuse 24 angeordnete Verbindungsleitung 26 und weiter zur Tasche. Der erste Strömungswiderstand 33 bewirkt im Betrieb des Reglers 1 einen Druckabfall, so daß das im zweiten Druckraum 31 gegebene zweite Druckniveau kleiner ist als das erste Druckniveau p1 im ersten Druckraum 27. Weiter bewirkt der variable zweite Strömungswiderstand 49 im Betrieb einen Druckabfall, so daß das in der Medienverbindung 3 (Bohrung 45, Verbindungsleitung 26) gegebene Druckniveau p3, welches dem Druck in der Hydrostatiktasche entspricht, kleiner als das Druckniveau p2 ist.

Figur 1 zeigt, daß das Steuerelement 25 also einerseits mit dem Druck p1 im ersten Druckraum 27 und andererseits mit dem in zweiten Druckraum 31 gegebenen Druck p2 sowie dem im dritten Druckraum beziehungsweise in der Medienverbindung 3 gegebenen Druck p3 beaufschlagt wird. Zusätzlich wirkt die Federkraft des von einer federelastischen Platte gebildeten Steuerelements 25 derart, daß diese mit der auf dem Druckniveau p2 und p3 beruhenden Druckkraft gleichgerichtet ist.

Im stationären Betrieb des Reglers 1, also bei konstantem Pumpendruck p1 und konstantem Druck p3 ist die Summe der Kräfte aus den drei genannten Drücken und der Federkraft auf das Steuerelement 25 gleich null. Wird der Druck p2 bei konstantem Druck p1 und p3 durch eine Störung zum Beispiel verkleinert, so würde das Steuerelement 25 durch den dann überwiegenden Druck p1 in Figur 1 nach rechts bewegt und die Größe des variablen zweiten Strömungswiderstandes 49 so vergrößert, daß die Summe der Kräfte auf das Steuerelement 25 wieder gleich null ist, so daß also der Druck p2 seinen ursprünglichen Wert wieder erreicht. Bei einer Vergrößerung von p2 aufgrund einer Störung würde der umgekehrte Vorgang ablaufen. Durch den Regler 1 wird also bei konstantem Druck p1 und p3 ein konstanter Differenzdruck (p1 - p2) über den ersten Strömungswiderstand 33 und somit durch den Regler 1 eingestellt. Wird der Druck p3 in den durch die Medienverbindung 3 gegebenen dritten Druckraum und folglich in der Hydrostatiktasche genügend langsam verändert, so daß dynamische Kräfte vernachlässigt werden, so gilt die Aussage, daß die Summe der Kräfte aus den drei Druckwerten und der Federkraft gleich null ist, auch hierfür. Damit ist einem höheren Druck p3 ein niedrigerer Druck p2, also ein höherer Differenzdruck (p1 - p2) und somit ein größerer Durchfluß Q zugeordnet.

Figur 3 zeigt eine Draufsicht auf den Regler 1, dessen zweites Gehäuseteil 11 mehrere, hier insgesamt vier Bohrungen 51 aufweist, die sich sowohl durch den Deckel des zweiten Gehäuseteils 11 erstrecken, als auch durch dessen Mantel. Zur Montage des Reglers 1 werden nicht dargestellte Befestigungsmittel, beispielsweise Schrauben durch die Bohrungen 51 hindurchgesteckt und in dafür vorgesehene Gewindebohrungen, die im Gehäuse 24 der Lagerung, Gewindespindelmutter oder Führung eingebracht sind, eingeschraubt. Dabei werden die Gehäusefläche 21 des zweiten Gehäuseteils 11 und die Anlagefläche 19 des in der Sackbohrung 13 des zweiten Gehäuseteils 11 angeordneten ersten Gehäuseteils 9 mit der Gegenfläche 23 der Lagerung, Gewindespindelmutter oder Führung in Anlage gebracht. Hierdurch wird ohne zusätzliche Montageelemente eine direkte Medienverbindung zwischen Regler 1 und Tasche sowie zwischen Regler 1 und Medienversorgung geschaffen.

Die Sackbohrung 13 des zweiten Gehäuseteils 11 ist gegenüber der Umgebung mittels einer in Figur 1 dargestellten Dichtung 53 abgedichtet, die in einer Ringnut 55 angeordnet ist. Die Ringnut 55 ist ausgehend von der Gehäusefläche 21 des zweiten Gehäuseteils 11 in dieses eingebracht. Weiterhin ist die Durchlaßöffnung 46 der Bohrung 45 im Anlagebereich der Anlagefläche 19 an der Gegenfläche 21 gegenüber der Ringnut 35b des ersten Strömungswiderstandes 33 mittels einer Dichtung 57 abgedichtet, die -ausgehend von der Anlagefläche 19 des ersten Gehäuseteils 9- in einer die Bohrung 45 umgebenden Ringnut 59 angeordnet ist.

Der erste Strömungswiderstand 33 kann in die Anlagefläche 19 und/oder in die Gegenfläche 23 eingearbeitet werden. Es ist aber auch möglich, den ersten Strömungswiderstand 33 in die Gehäusefläche 21 des zweiten Gehäuseteils 11 zu integrieren. Eine weitere Möglichkeit der Anordnung des ersten Strömungswiderstandes 33 ist in der Oberfläche 17 des ersten Gehäuseteils 9, also der der Anlagefläche 19 abgewandten Seite des ersten Gehäuseteils 9. Es bleibt festzuhalten, daß der erste Strömungswiderstand 33 in das erste Gehäuseteil 9, das zweite Gehäuseteil 11 und/oder das Gehäuse 24 der Lagerung, Gewindespindelmutter oder Führung integrierbar ist.

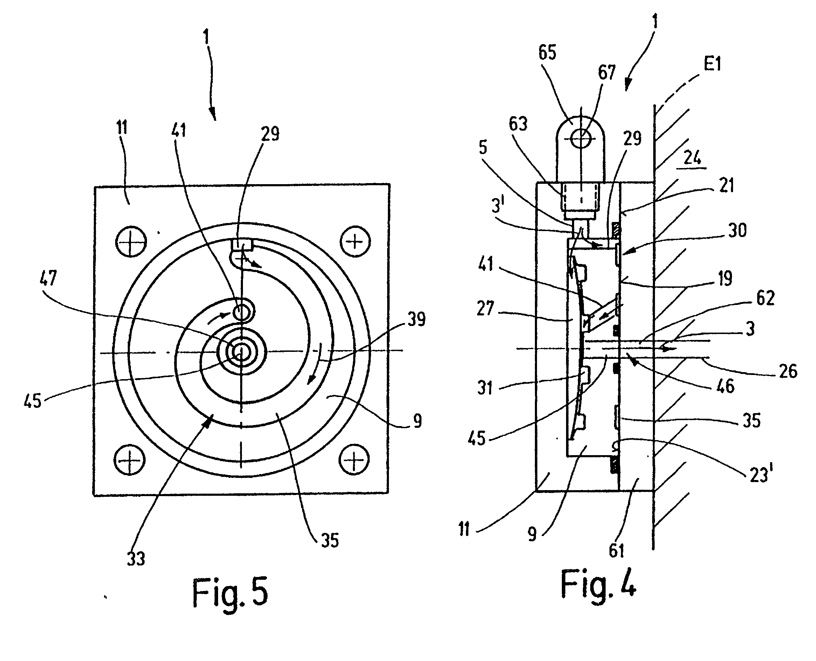

Figur 4 zeigt einen Querschnitt eines zweiten Ausführungsbeispiels des Reglers 1. Teile, die mit denen in den Figuren 1 bis 3 übereinstimmen, sind mit den gleichen Bezugszeichen versehen, so daß zu deren Beschreibung zu den Figuren 1 bis 3 verwiesen wird. Bei diesem Ausführungsbeispiel ist die Gegenfläche 23', an der das erste Gehäuseteil 9 mit seiner Anlagefläche 19 und das zweite Gehäuseteil 11 mit seiner Gehäusefläche 21 anliegen, von einer Oberfläche einer zwischen dem Regler 1 und dem Gehäuse 24 der Lagerung, Gewindespindelmutter oder Führung angeordneten Zwischenplatte 61 gebildet. In dieser ist ein von einer Bohrung gebildeter Verbindungskanal 62 eingebracht, der die Bohrung 45 im ersten Gehäuseteil 9 des Reglers 1 mit der im Gehäuse 24 der Lagerung, Gewindespindelmutter oder Führung angeordneten Verbindungsleitung 26 verbindet, die sich bis zur Hydro- oder Aerostatiktasche erstreckt.

Bei dem in Figur 4 dargestellten Regler 1 erfolgt die Medienverbindung 3' zwischen Medienversorgung, also der nicht dargestellten Pumpe und dem Regler 1 über das zweite Gehäuseteil 11. Hierzu ist eine Gewindebohrung 63 in das zweite Gehäuseteil 11 des Reglers 1 eingebracht, in die die über die randoffene Ausnehmung 29 im ersten Gehäuseteil 9 mit dem ersten Druckraum 27 verbundene Zufuhrleitung 5 mündet. In die Gewindebohrung 63 wird ein Anschluß 65 eingeschraubt, der Teil einer Ringleitung 67 ist. Mittels der Ringleitung 67, die mit weiteren -nicht dargestellten- Reglern verbunden werden kann, wird das Medium von der Medienversorgung in den Regler 1 geführt. Hierzu weist der Anschluß 65 eine nicht dargestellte Bohrung auf, die die Ringleitung 67 mit der Zufuhrleitung 5 verbindet.

Der erste, hier von lediglich einer Ringnut 35 gebildete Strömungswiderstand 33 ist auch bei dem in Figur 4 dargestellten Ausführungsbeispiel in die Anlagefläche 19 des ersten Gehäuseteils 9 eingearbeitet. Alternativ ist es möglich, den ersten Strömungswiderstand des Reglers in die Gegenfläche 23' zu integrieren, so daß bei einem bestehenden, auch bereits montierten Regler der ersten Strömungswiderstand einfach auf einen gewünschten Wert geändert werden kann, indem lediglich eine andere Zwischenplatte eingesetzt wird, deren den ersten Strömungswiderstand des Reglers bildende Ringnut beziehungsweise Ringnuten einen anderen/andere Widerstandswert(e) aufweist/aufweisen. Selbstverständlich ist es auch möglich, daß der erste Strömungswiderstand sowohl in die Anlagefläche 19 als auch in die Gegenfläche 23' eingearbeitet ist. Auch dann kann der erste Strömungswiderstand entweder durch Austausch der Zwischenplatte durch eine andere oder durch Weglassen der Zwischenplatte definiert geändert werden.

Bei einem weiteren Ausführungsbeispiel ist vorgesehen, den ersten Strömungswiderstand des Reglers ausschließlich in die Zwischenplatte 61 einzuarbeiten, beispielsweise in die Oberfläche der Zwischenplatte 61, die an dem Gehäuse 24 der Lagerung, Gewindespindelmutter oder Führung anliegt. Es ist ferner möglich, den ersten Strömungswiderstand teilweise oder vollständig in das Gehäuse 24 zu integrieren. Es bleibt festzuhalten, daß der erste Strömungswiderstand in dem ersten Gehäuseteil 9, der Zwischenplatte 61 und/oder dem Gehäuse 24 integrierbar ist.

Figur 5 zeigt eine Unteransicht des in Figur 4 dargestellten Reglers 1, bei dem der erste Strömungswiderstand von lediglich einer, hier spiralförmigen Ringnut 35 gebildet ist. Diese ist ausgehend von der Anlagefläche 19 des ersten Gehäuseteils 9 in dieses eingebracht.

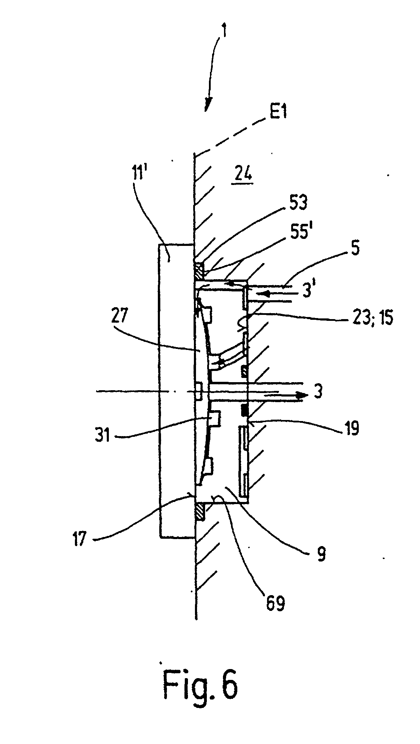

Figur 6 zeigt einen Querschnitt eines dritten Ausführungsbeispiels des Reglers 1. Gleiche Teile sind mit gleichen Bezugszeichen versehen, so daß zu deren Beschreibung zu den vorangegangenen Figuren verwiesen wird. Im folgenden soll lediglich auf die Unterschiede näher eingegangen werden. Das erste Gehäuseteil 9 des Reglers 1 ist in einer kreisrunden Sackbohrung 69 angeordnet, die in einem lediglich gestrichelt angedeuteten Gehäuse 24 der Lagerung, Gewindespindelmutter oder Führung eingebracht ist. Das erste Gehäuseteil 9 liegt mit seiner Anlagefläche 19 an der Gegenfläche 23 des Gehäuses 24 an, die von dem Grund der Sackbohrung 69 gebildet wird. Das zweite Gehäuseteil 11' des in Figur 6 im montierten Zustand dargestellten Reglers 1 ist -wie das erste Gehäuseteil 9- scheibenförmig ausgebildet und an dem Gehäuse 24 der Lagerung, Gewindespindelmutter oder Führung derart angebracht, daß die Sackbohrung 69 mit dem darin angeordneten ersten Gehäuseteil 9 verschlossen ist. Diese Ausführungsform des Reglers 1 mit dem teilweise in das Gehäuse 24 der Lagerung, Gewindespindelmutter oder Führung integrierten Reglergehäuse 7 ist besonders platzsparend.

Allen anhand der Figuren 1 bis 6 beschriebenen Ausführungsbeispielen ist gemeinsam, daß das Reglergehäuse 7 mindestens zwei Gehäuseteile umfaßt, zwischen denen der erste Druckraum 27, das Steuerelement 25, der zweite Druckraum 31 und der zweite Strömungswiderstand 49 angeordnet sind.

Der erste Strömungswiderstand 33 ist bei dem Ausführungsbeispiel gemäß Figur 6 in die am ersten Gehäuseteil 9 des Reglergehäuses 7 ausgebildete Anlagefläche 19 eingearbeitet. Es ist aber auch möglich, den ersten Strömungswiderstand 33 in die Gegenfläche 23 beziehungsweise 23' einzuarbeiten, wobei die Gegenfläche 23' eine Gehäusefläche der Lagerung, Gewindespindelmutter oder Führung, oder die Oberfläche einer zwischen dem Regler und der Lagerung, Gewindespindelmutter oder Führung angeordneten Zwischenplatte 61 ist. Bei einem weiteren Ausführungsbeispiel ist vorgesehen, daß der erste Strömungswiderstand 33 sowohl in der Anlagefläche 19 des ersten Gehäuseteils 9 des Reglergehäuses 7, als auch in die Gegenfläche 23,23' eingearbeitet ist. Der erste Strömungswiderstand 33 kann ohne weiteres auch in Gehäusefläche 21 des zweiten Gehäuseteils 11 beziehungsweise 11' eingebracht werden. Schließlich ist es auch möglich, daß der erste Strömungswiderstand 33 in die Oberfläche 17 des ersten Gehäuseteils 9 integriert wird.

Der erste Strömungswiderstand 33 kann von einer oder mehreren Nuten gebildet werden, die einen linearen und/oder kurvenförmigen Verlauf aufweisen, beispielsweise spiralförmig oder kreisförmig. Die Nut beziehungsweise die Nuten, die den ersten Strömungswiderstand bilden, können praktisch jede beliebige Form aufweisen.

Bei einem Ausführungsbeispiel des Reglers, bei dem der erste Strömungswiderstand in die am ersten Gehäuseteil 9 ausgebildete Anlagefläche 19 und/oder in die Gegenfläche 23,23' eingearbeitet ist, kann der erste Strömungswiderstand im demontierten Zustand des Reglers sehr leicht gereinigt werden. Dies ist außerdem auch bei einem Ausführungsbeispiel möglich, bei der der erste Strömungswiderstand in die Gehäusefläche 21 des zweiten Gehäuseteils 11 beziehungsweise 11' eingebracht ist.

Ein Austausch des Reglers 1 ist beispielsweise dadurch, daß das Reglergehäuse mindestens zwei Gehäuseteile umfaßt, sehr leicht möglich, indem wenigstens eines der beiden Gehäuseteile durch ein anderes ausgetauscht wird, wodurch zum Beispiel der erste Strömungswiderstand und somit das Regelverhalten des Reglers verändert werden kann.

Zusammenfassend ist festzuhalten, daß durch die direkte Medienverbindung zwischen Regler und Tasche und/oder Medienversorgung, die beim Montieren des Reglers 1 an eine der Lagerung, Gewindespindelmutter oder der Führung zugeordneten Gegenfläche unmittelbar gebildet wird, ist eine Montage des Reglers einfach und schnell durchführbar, ohne daß zusätzliche Montageelemente benötigt werden. Weiterhin können durch die unmittelbare Anordnung des Reglers an der Hydro-/Aerostatiktasche der Lagerung, Gewindespindelmutter oder Führung kurze Verbindungsleitungen zwischen dem Regler und der Tasche realisiert werden, so daß das Medium in den Verbindungsleitungen überhaupt nicht oder nur relativ gering schwingt.

## Patentansprüche

1. Regler (1) zur Regelung eines mindestens einer Hydrostatik- oder Aerostatiktasche einer Lagerung, Gewindespindelmutter oder einer Führung von einer Medienversorgung (5) zugeführten Medienstromes, mit einem Reglergehäuse (7), mit einer Gegenfläche (23;23') und mit von einem gegen die Kraft eines Federelements beweglichen Steuerelement (25) getrennten Druckräumen (27,31,45), von denen ein mit einem ersten Druckniveau (p1) beaufschlagter erster Druckraum (27) unmittelbar mit der Medienversorgung (5), ein mit einem niedrigeren zweiten Druckniveau (p2) beaufschlagter zweiter Druckraum (31) über einen ersten Strömungswiderstand (33) mit der Medienversorgung und ein dritter Druckraum(45), der mit einem dritten Druckniveau (p3) beaufschlagt ist, das dem in der Hydrostatik- oder Aerostatiktasche entspricht, mit der Hydrostatik- oder Aerostatiktasche verbunden ist, wobei durch das Steuerelement (25) ein zwischen dem zweiten und dritten Druckraum angeordneter, den der Tasche zugeführten Medienstrom beeinflussender, variabler zweiter Strömungswiderstand (49), dessen Größe durch die Kraftwirkung des ersten Druckraumes (27) angehoben, durch die Wirkung der Federkraft sowie die Kraftwirkungen des zweiten und dritten Druckraumes aber vermindert wird, ausgebildet ist, **dadurch gekennzeichnet, daß** die Gegenfläche (23;23') der Lagerung, Gewindespindelmutter oder der Führung zugeordnet ist und daß das Reglergehäuse (7) eine eine Durchlaßöffnung (30;46) für den Medienstrom umfassende Anlagefläche (19) aufweist, mit der das Reglergehäuse (7) im montierten Zustand an der der Lagerung, Gewindespindelmutter oder der Führung zugeordneten Gegenfläche (23;23') anliegt, so daß eine direkte Medienverbindung (3;3') zwischen Regler (1) und Tasche und gegebenenfalls zwischen Regler (1) und Medienversorgung geschaffen wird.

2. Regler nach Anspruch 1, **dadurch gekennzeichnet, daß** das Reglergehäuse (7) mindestens drei Gehäuseteile (9,11,24;11,9,61;11',9,24) umfaßt, zwischen denen der erste Druckraum (27), das Steuerelement (25), der zweite Druckraum (31) und der zweite Strömungswiderstand (49) angeordnet sind.

3. Regler nach Anspruch 1 oder 2, **dadurch gekennzeichnet, daß** der erste Strömungswiderstand (33) in die am ersten Gehäuseteil (9) ausgebildete Anlagefläche (19) und/oder in die Gegenfläche (23;23') eingearbeitet ist.

4. Regler nach einem der vorhergehenden Ansprüche, **dadurch gekennzeichnet, daß** die Gegenfläche (23;23') eine Gehäusefläche der Lagerung, Gewindespindelmutter oder Führung, oder die Oberfläche einer zwischen dem Regler und der Lagerung, Gewindespindelmutter oder Führung angeordneten Zwischenplatte (61) ist.

5. Regler nach einem der vorhergehenden Ansprüche 1, 2 oder 4, **dadurch gekennzeichnet, daß** der erste Strömungswiderstand in eine Gehäusefläche (21) des zweiten Gehäuseteils eingebracht ist.

6. Regler nach einem der vorhergehenden Ansprüche 1, 2 oder 4, **dadurch gekennzeichnet, daß** der erste Strömungswiderstand in die der Anlagenfläche (19) abgewandte Oberfläche (17) des die Anlagefläche (19) aufweisenden ersten Gehäuseteils (9) eingebracht ist.

7. Regler nach einem der vorhergehenden Ansprüche, **dadurch gekennzeichnet, daß** der erste Strömungswiderstand (33) über mindestens einen, in das erste Gehäuseteil (9) eingebrachten -vorzugsweise als kreisrunde Bohrung (41) ausgebildeten- Kanal mit dem zweiten Druckraum (31) verbunden ist.

8. Regler nach einem der vorhergehenden Ansprüche, **dadurch gekennzeichnet, daß** die Medienverbindung (3') zwischen Medienversorgung und Regler (1) über das zweite Gehäuseteil (11) realisierbar ist.

9. Regler nach einem der vorhergehenden Ansprüche, **dadurch gekennzeichnet, daß** das zweite -vorzugsweise topfförmig ausgebildete- Gehäuseteil (11) eine vorzugsweise kreisförmige Sackbohrung (13) aufweist, in der das erste -vorzugsweise runde- Gehäuseteil (9) angeordnet ist.

10. Regler nach einem der vorhergehenden Ansprüche 1 bis 8, **dadurch gekennzeichnet, daß** das erste -vorzugsweise runde- Gehäuseteil (9) in einer in das Gehäuse (24) der Lagerung, Gewindespindelmutter oder Führung eingebrachten -vorzugsweise kreisrunden- Sackbohrung (69) angeordnet ist und daß die Sackbohrung (69) mittels des zweiten Gehäuseteils (11') verschließbar ist.

## Claims

1. Regulator (1) for adjusting a media flow supplied to at least one hydrostatic- or aerostatic pocket of a bearing, threaded spindle nut or of a guide by a media supply (5), having a regulator housing (7), a counter-surface (23; 23') and pressure chambers (27, 31, 45) which are separated from a control element (25) which can be moved against the force of a spring element, a first pressure chamber (27) of which, supplied with a first pressure level (p1), is supplied directly with the media supply (5), a second pressure chamber (31) of which, supplied with a lower second pressure level (p2), is supplied with the media supply via a first flow resistance (33) and a third pressure chamber (45) of which, which is supplied with a third pressure level (p3) which corresponds to that in the hydrostatic- or aerostatic pocket, is connected to the hydrostatic- or aerostatic pocket, a variable second flow resistance (49), which is disposed between the second and third pressure chamber and influences the media flow supplied to the pocket, being configured by means of the control element (25), the size of said flow resistance being increased by means of the force effect of the first pressure chamber (27), but reduced by means of the effect of the spring force and the force effects of the second and third pressure chamber, **characterised in that** the counter-surface (23; 23' ) is assigned to the bearing, threaded spindle nut or to the guide, and **in that** the regulator housing (7) has a bearing surface (19) which comprises an admission opening (30; 46) for the media flow, with which bearing surface the regulator housing (7) in the assembled state abuts on the counter-surface (23; 23') which is assigned to the bearing, threaded spindle nut or to the guide, so that a direct media connection (3; 3') is produced between regulator (1) and pocket, and if necessary between regulator (1) and media supply.

2. Regulator according to claim 1, **characterised in that** the regulator housing (7) comprises at least three housing portions (9, 11, 24; 11, 9, 61; 11', 9, 24) between which the first pressure chamber (27), the control element (25), the second pressure chamber (31) and the second flow resistance (49) are disposed.

3. Regulator according to claim 1 or 2, **characterised in that** the first flow resistance (33) is incorporated into the bearing surface (19), which is configured on the first housing portion (9), and/or into the counter-surface (23; 23').

4. Regulator according to one of the preceding claims, **characterised in that** the counter-surface (23; 23') is a housing surface of the bearing, threaded spindle nut or guide, or the surface of an intermediate plate (61) which is disposed between the regulator and the bearing, threaded spindle nut or guide.

5. Regulator according to one of the preceding claims 1, 2 or 4, **characterised in that** the first flow resistance is introduced into a housing surface (21) of the second housing portion.

6. Regulator according to one of the preceding claims 1, 2 or 4, **characterised in that** the first flow resistance is introduced into the surface (17) of the first housing portion (9) which has the bearing surface (19), said surface (17) being orientated away from the bearing surface (19).

7. Regulator according to one of the preceding claims, **characterised in that** the first flow resistance (33) is connected to the second pressure chamber (31) via at least one channel which - preferably configured as a circular boring (41) - is introduced into the first housing portion (9).

8. Regulator according to one of the preceding claims, **characterised in that** the media connection (3') between media supply and regulator (1) can be produced via the second housing portion (11).

9. Regulator according to one of the preceding claims, **characterised in that** the second - preferably configured pot-shaped - housing portion (11) has a preferably circular blind boring (13) in which the first - preferably round - housing portion (9) is disposed.

10. Regulator according to one of the preceding claims 1 to 8, **characterised in that** the first - preferably round - housing portion (9) is disposed in a - preferably circular - blind boring (69) which is introduced into the housing (24) of the bearing, threaded spindle nut or guide, and **in that** the blind boring (69) can be closed by means of the second housing portion (11').

## Revendications

1. Régulateur (1) pour réguler au moins une poche hydrostatique ou aérostatique d'un palier, d'un écrou à tige filetée, ou pour guider une veine de fluide fournie par une alimentation (5), comprenant un boîtier de régulateur (7), avec une surface antagoniste (23, 23') et des chambres de pression (27, 31, 45) séparées par un élément de commande (25) mobile contre la force d'un élément de ressort, chambres dont l'une est une première chambre de pression (27) recevant un premier niveau de pression (p1), directement reliée à l'alimentation en fluide (5), une seconde chambre de pression (31) sollicitée par un second niveau de pression plus faible (p2), est reliée par une première résistance hydraulique (33) à l'alimentation en fluide, et une troisième chambre de pression (45) recevant un troisième niveau de pression (p3), qui correspond à la poche hydrostatique ou aérostatique, est reliée à la poche hydrostatique ou aérostatique, tandis que l'élément de commande (25) réalise une seconde résistance hydraulique (49), variable, entre la seconde et la troisième chambre de pression, influençant la veine de fluide arrivant dans la poche, l'amplitude de cette résistance étant augmentée par l'action de la force de la première chambre de pression (27) mais réduite par l'action de la force de ressort ainsi que par l'action des forces de la seconde et de la troisième chambre de pression,
**caractérisé en ce que**
la surface antagoniste (23, 23') est associée au palier, à l'écrou à vis ou au moyen de guidage, et
le boîtier de régulateur (7) comporte une surface d'appui (19) comprenant un orifice de passage (30, 46) pour la veine de fluide, à l'aide de laquelle le boîtier de régulateur (7) s'appuie à l'état monté contre la surface antagoniste (23, 23') associée au palier, à l'écrou à vis ou au moyen de guidage, pour avoir une liaison directe de fluide (3, 3') entre le régulateur (1) et la poché et le cas échéant entre le régulateur (1) et l'alimentation en fluide.

2. Régulateur selon la revendication 1,
**caractérisé en ce que**
le boîtier de régulateur (7) comprend au moins trois parties de boîtier (9, 11, 24 ; 11, 9, 61 ; 11', 9, 24) entre lesquelles se trouve la première chambre de pression (27), l'élément de commande (25), la seconde chambre de pression (31) et la seconde résistance hydraulique (49).

3. Régulateur selon l'une quelconque des revendications 1 ou 2,
**caractérisé en ce que**
la première résistance hydraulique (33) est usinée dans la surface d'appui (19) réalisée dans la première partie de boîtier (9) et/ou dans la surface antagoniste (23, 23').

4. Régulateur selon l'une quelconque des revendications précédentes,
**caractérisé en ce que**
la surface antagoniste (23, 23') est une surface de boîtier du palier de l'écrou à vis ou du moyen de guidage ou encore de la surface supérieure d'un plateau intermédiaire (61) installé entre le régulateur et le palier, l'écrou fileté ou le moyen de guidage.

5. Régulateur selon l'une quelconque des revendications 1, 2 ou 4,
**caractérisé en ce que**
la première résistance hydraulique est réalisée dans une surface de boîtier (21) de la seconde partie de boîtier.

6. Régulateur selon l'une quelconque des revendications 1, 2 ou 4,
**caractérisé en ce que**
la première résistance hydraulique est réalisée dans la surface supérieure (17) à l'opposé de la surface d'appui (19) de la première partie de boîtier (9) comportant la surface d'appui (19).

7. Régulateur selon l'une quelconque des revendications précédentes,
**caractérisé en ce que**
la première résistance hydraulique (33) est reliée à la seconde chambre de pression (31) par au moins un canal réalisé dans la première partie de boîtier (9), de préférence sous la forme d'un perçage circulaire (41).

8. Régulateur selon l'une quelconque des revendications précédentes,
**caractérisé en ce que**
la liaison de fluide (3') entre l'alimentation de fluide et le régulateur (1) est réalisée par la seconde partie de boîtier (11).

9. Régulateur selon l'une quelconque des revendications précédentes,
**caractérisé en ce que**
la seconde partie de boîtier (11), de préférence réalisée en forme de pot, comporte un perçage borgne (13), de préférence circulaire, recevant la première partie de boîtier (9), de préférence ronde.

10. Régulateur selon l'une quelconque des revendications 1 à 8,
**caractérisé en ce que**
la première partie de boîtier (9) (de préférence ronde) est prévue dans un perçage borgne (69), de préférence circulaire, réalisé dans le boîtier (24) du palier, de l'écrou à vis ou du moyen de guidage, et le perçage borgne (69) se ferme à l'aide de la seconde partie de boîtier (11').
